Europäisches Patentamt

European Patent Office

Office européen des brevets

(11) Veröffentlichungsnummer: **0 133 606**
**A2**

(12) **EUROPÄISCHE PATENTANMELDUNG**

(21) Anmeldenummer: **84810354.5**

(22) Anmeldetag: **20.07.84**

(51) Int. Cl.⁴: **F 24 B 1/187**
**F 23 L 11/00**

(30) Priorität: **21.07.83 CH 4004/83**

(43) Veröffentlichungstag der Anmeldung:
**27.02.85 Patentblatt 85/9**

(84) Benannte Vertragsstaaten:
**BE CH DE FR LI**

(71) Anmelder: **Rüegg Cheminéebau AG**
**Schwäntenmos 4**
**CH-8126 Zumikon(CH)**

(72) Erfinder: **Rüegg, Walter**
**Schwäntenmos 4**
**CH-8126 Zumikon(CH)**

(74) Vertreter: **Patentanwälte Schaad, Balass, Sandmeier,
Alder**
**Dufourstrasse 101 Postfach**
**CH-8034 Zürich(CH)**

(54) **Kamin.**

(57) Im Rauchabzug (1) des Cheminées ist eine mittels eines Motors (7) verstellbare, zweiteilige Rauchklappe (2,3,4) angeordnet. Für die Steuerung des Motors (7) ist eine Steuereinrichtung mit einem Temperaturfühler (16) vorgesehen. Die Steuereinrichtung weist weiter eine Drucktaste zum Oeffnen sowie eine Drucktaste zum Schliessen der Rauchklappe (2) auf. Nach Anzünden des Feuers wird beim Erreichen einer ersten vorbestimmten Temperatur ein Schaltkreis aktiviert, der die Schliess-Drucktaste ausser Wirkung setzt. Nach Beendigung der Feuerungsphase wird beim Unterschreiten einer zweiten vorbestimmten Temperatur die Rauchklappe (2) automatisch geschlossen. Eine unerwünscht starke Abkühlung des Cheminées und dessen Umgebungsluft wird damit vermieden. Im weitern wird ein unbeabsichtigtes und zu frühes Schliessen der Rauchklappe (2) verunmöglicht.

Fig. 1

EP 0 133 606 A2

0133606

Cheminée
_____

Die vorliegende Erfindung betrifft ein Cheminée gemäss
Oberbegriff des Anspruches 1.

Es ist bekannt, dass Cheminées, d.h. offene Kamine, einen
geringen Wärmenutzungsgrad aufweisen. Es sind daher schon
die verschiedensten Massnahmen zur Behebung dieses Nachteils vorgeschlagen worden, so z.B. das Einbauen von Wärmetauschern zur Ausnutzung der sonst durch den Kamin abziehenden Wärme oder ein Abschliessen des Feuerungsraumes zur Regulierung des Luftdurchsatzes. Alle diese Vorschläge zielen darauf ab, die während der Feuerungsphase
erzeugte Verbrennungswärme besser zu nutzen.

Es ist aber auch erkannt worden, dass nicht nur während,
sondern auch nach Abschluss der Feuerungsphase Energieverluste auftreten, welche durch Offenlassen der im Rauchabzug angeordneten Rauchklappe bedingt sind (FR-A 2 505
457 und FR-A 2 478 268). Dieses Offenlassen der Rauchklappe beruht nicht immer auf Vergesslichkeit, sondern lässt
sich häufig deswegen nicht vermeiden, weil das Feuer im
Zeitpunkt, in dem sich die Hausbewohner zur Ruhe begeben,
noch weiterbrennt und -glimmt und ein Schliessen der Rauchklappe somit noch nicht möglich ist.

Aus der bereits erwähnten FR-A 2 478 268 ist es nun be-

16.7.1984                                        A 4692 Ep

kannt, zur Behebung dieses Mangels einen Antrieb vorzusehen, der während der auf die Feuerungsphase folgenden Abkühlungsphase bei Erreichen einer bestimmten Temperatur, z.B. 40°C, die Rauchklappe automatisch schliesst. Der Antriebsmotor wirkt über eine Reibungskupplung auf eine mit der Rauchklappe verbundene Welle, die mit einem Handgriff zum manuellen Betätigen der Rauchklappe versehen ist. Der Motor dient nur zum Schliessen der Rauchklappe, während das Oeffnen derselben von Hand erfolgen muss. Die Rauchklappe kann jedoch jederzeit auch von Hand geschlossen werden, d.h. auch während der Feuerungsphase, während der das Feuer noch brennt.

Der vorliegenden Erfindung liegt nun die Aufgabe zugrunde, ein Cheminée der eingangs genannten Art zu schaffen, das neben dem energiesparenden automatischen Schliessen des Absperrorganes nach Beendigung der Feuerungsphase ein einfaches, störungsunanfälliges sowie gefahrloses Bedienen ermöglicht.

Diese Aufgabe wird erfindungsgemäss durch die Merkmale des kennzeichnenden Teils des Anspruches 1 gelöst.

Da ein Schliessen des Abschlussorganes von Hand durch den nach dem Anfeuern des Cheminées eingeschalteten Steuerkreis verunmöglicht wird, kann das Abschlussorgan nicht unbeabsichtigt oder zu früh geschlossen werden. Damit wird verhindert, dass bei noch brennendem oder noch glimmendem Feuer das Abschlussorgan in seine Schliessstellung gebracht wird, was zu einer Ueberhitzung des Rauchabzuges und der Cheminéeumkleidung führen

könnte.

Eine einfache Bedienbarkeit ergibt sich dann, wenn der für das automatische Schliessen des Abschlussorganes ohnehin vorhandene Antrieb auch zum Oeffnen des Abschlussorganes verwendet wird. In diesem Falle ist es zweckmässig, die insbesondere als Steuerorgan ausgebildeten Mittel zum manuellen Oeffnen des Abschlussorganes als Teil der Steuereinrichtung für den Antrieb auszugestalten. Vorzugsweise wird dann die Steuereinrichtung und das Steuerorgan derart ausgebildet, dass beim Betätigen des Steuerorganes zwecks Oeffnen des Abschlussorganes der Steuerkreis desaktiviert, d.h. zurückgestellt wird.

Bei einer bevorzugten Ausführungsform wird ein Temperaturfühler verwendet, der zum Aktivieren des Steuerkreises anspricht, sobald nach Entfachen des Feuers eine erste Temperatur, z.B. $50^{\circ}$C, erreicht wird und der zudem nach Abschluss der Feuerungsphase beim Absinken der Temperatur auf einen zweiten Wert, z.B. $30^{\circ}$C, ein automatisches Schliessen des Abschlussorganes bewirkt. Dabei wird die Steuereinrichtung vorteilhafterweise so gestaltet, dass ein Oeffnen des Abschlussorganes ausgelöst wird, sobald der Temperaturfühler einen Temperaturanstieg feststellt. Erreicht bei einem solchen Temperaturanstieg die Temperatur einen dritten Wert, z.B. $30^{\circ}$C, so spricht der Temperaturfühler an. Bei einer solchen Ausführung ist nicht nur ein automatisches Oeffnen zu Beginn der Feuerungsphase möglich, sondern auch ein erneutes Oeffnen des Abschlussorganes nach dessen vorherigem automatischen Schliessen, falls ein Hitzestau auftritt, der z.B. durch ein erneutes Aufflackern des Feuers verursacht werden kann.

Es ist weiter von Vorteil, ein von Hand betätigbares und
mit der Steuereinrichtung verbundenes Regelorgan zum
Einstellen des Oeffnungswinkels des Abschlussorganes vorzusehen. Auf diese Weise ist eine Einstellung der optimalen Abzugsöffnung für die Rauchgase möglich. Damit wird
vermieden, dass die Rauchgase zu viel Luft mitziehen.
Durch das Ausbilden des Abschlussorganes gemäss Anspruch 10 ist es möglich, die Durchlassöffnung für Rauchgase im wesentlichen symmetrisch zu regulieren, wodurch
Turbulenzen im Rauchabzug vermieden werden können.

Im folgenden wird anhand der Zeichnung ein Ausführungsbeispiel des Erfindungsgegenstandes näher erläutert. Es
zeigt rein schematisch:

Fig.    1    eine Draufsicht auf einen oben offen dargestellten Rauchabzug mit in diesem angeordneter Rauchklappe und einem Antrieb für
             diese Rauchklappe.

Fig.    2    einen Abschnitt des Rauchabzuges gemäss

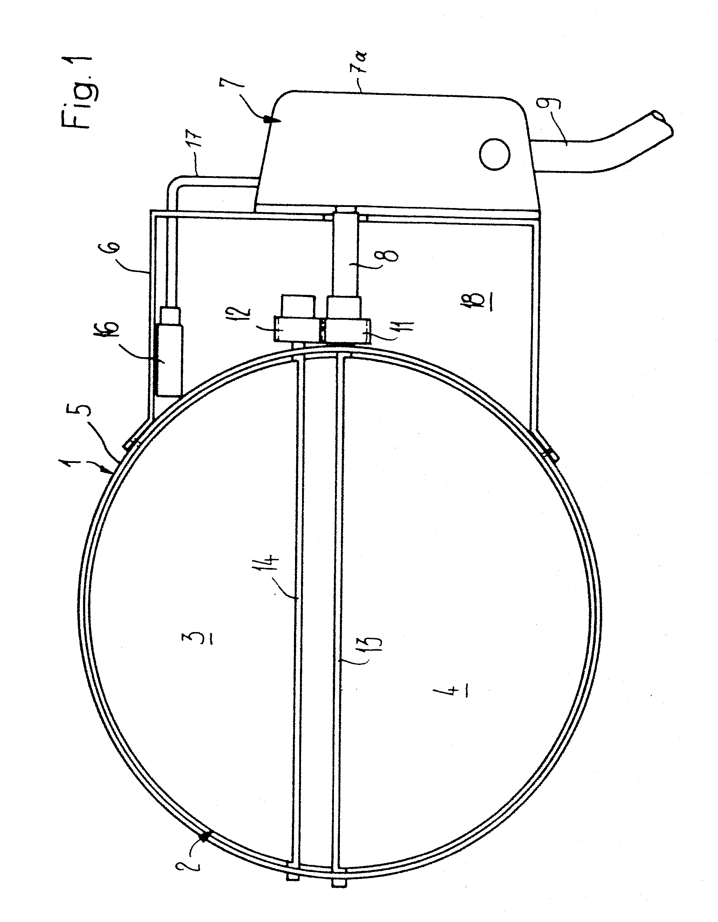

             Fig. 1 in Seitenansicht, und

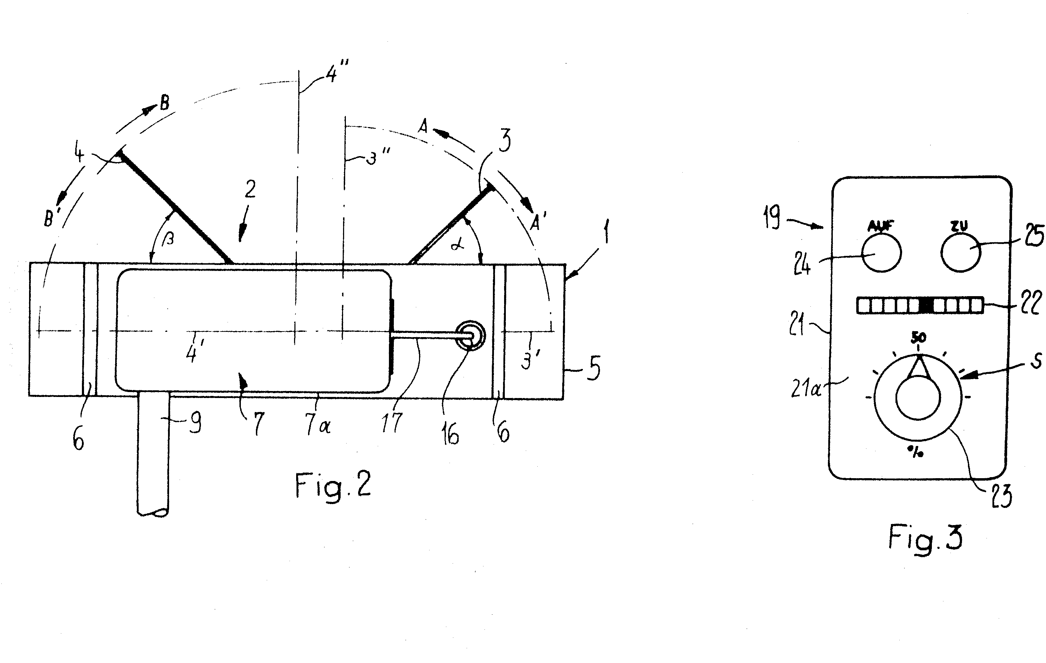

Fig.    3    in Vorderansicht ein Steuergerät für den
             Antrieb für die Rauchklappe.

Im in den Fig. 1 und 2 angedeuteten und mit 1 bezeichneten Rauchabzug ist eine Rauchklappe (Absperrorgan) 2 angeordnet. Diese Rauchklappe besteht aus zwei Teilen 3 und 4. An der Aussenseite 5 des Rauchabzuges 1 ist ein Haltebügel 6 angebracht, an welchem ein Antriebsmotor 7 mit einer Antriebswelle 8 befestigt ist. In das den Antriebsmotor umgebende Gehäuse 7a ist ein Verbindungskabel 9 hineingeführt. Auf der Antriebswelle 8 sitzt ein erstes Zahnrad 11, das mit einem zweiten Zahnrad 12 in Eingriff steht. Dieses zweite Zahnrad 12 wird vom ersten Zahnrad 11 gegenläufig angetrieben. Die beiden Zahnräder 11 und 12 sind auf parallel zueinander angeordneten und mit einem Längsschlitz versehenen Wellen 13 bzw. 14 gelagert. In jedem dieser Schlitze ist ein Klappenteil 3 bzw. 4 festgehalten. Zum Oeffnen der Rauchklappe 2 werden die Klappenteile 3, 4 vom Antrieb 7 her aus ihrer in Fig. 2 mit 3' bzw. 4' angedeuteten Schliessstellung in Richtung der Pfeile A bzw. B, d.h. in entgegengesetztem Sinn, gegen die Offenstellung verschwenkt, die mit 3" bzw. 4'' angedeutet ist. Für das Schliessen der Rauchklappe 2 werden die Klappenteile 3, 4 im Gegensinn, d.h. in Richtung der Pfeile A' B', verschwenkt. In Fig. 2 sind die beiden Klappenteile 3, 4 in einer Zwischenstellung dargestellt, in der sie miteinander eine V-Form bilden. Die Oeffnungswinkel der Klappenteile 3,4 sind mit $\alpha$ bzw. $\beta$ angegeben.

Dank dieser zweiteiligen Ausbildung der Rauchklappe 2 und der damit verbundenen Möglichkeit zum Oeffnen der Klappenteile 3, 4 zu einer V-Form lässt sich der durch den Rauchabzug 2 aufsteigende Rauchgasstrom symmetrisch und gleichmässig regulieren, ohne dass Turbulenzen im Rauchabzug entstehen.

Benachbart zum Antriebsmotor 7 ist am Haltebügel 6 ein Temperaturfühler 16 angebracht, der beispielsweise ein NTC-Widerstand (Heissleiter) sein kann. Der Temperaturfühler 16 ragt in den von der Aussenseite 5 des Rauchabzuges 1 und den Haltebügel 6 gebildeten Raum 18 hinein. Mit dem Temperaturfühler 16 ist eine Verbindungsleitung 17 verbunden. Der Haltebügel 6 mit allen an diesem befestigten Elementen ist im nicht dargestellten Schürzenhohlraum untergebracht.

Der Antriebsmotor 7 ist über das Verbindungskabel 9, in welchem auch die Verbindungsleitung 17 verläuft, mit einem Steuergerät 19 (Fig . 3) verbunden, das an einem geeigneten Ort im Bereich des Cheminées angeordnet ist. Das Steuergerät 19 weist ein Gehäuse 21 mit einer Frontplatte 21a auf. An dieser Frontplatte 21a ist eine optische Anzeige 22 vorgesehen, durch welche die Oeffnungsstellung der Rauchklappe 2, d.h. der Klappenteile 3,4 angezeigt wird. Die Anzeige 22 besteht aus einer Anzahl von nebeneinander angeordneten Feldern, die über nicht dargestellte Leuchtdioden der Klappenstellung entsprechend erhellt werden. Unterhalb der Anzeige 22 ist ein von Hand drehbarer Einstellknopf 23 eines Drehreglers angeordnet, der mit einer Skala S zusammenwirkt. Mittels dieses Einstellknopfes 23 kann der Oeffnungswinkel $\alpha$, $\beta$ der Klappenteile 3,4 eingestellt bzw. vorgewählt werden. An der Frontplatte 21a sind weiter zwei Drucktasten 24 und 25 vorhanden. Mittels der Drucktaste 24 kann die Rauchklappe 2 geöffnet werden, während die Drucktaste 25 zum Schliessen der Rauchklappe 2 dient.

Im Steuergerät 19 ist weiter eine nicht näher dargestellte Steuerschaltung untergebracht, die über das Verbindungskabel 9 mit einer ebenfalls nicht näher dargestellten Ansteuerschaltung für den Antriebsmotor 7 sowie mit dem Temperaturfühler 16 verbunden ist. Diese Steuerschaltung und die im Gehäuse 7a untergebrachte Ansteuerschaltung für den Motor 7 sind so aufgebaut, dass die folgende Betriebsweise möglich ist:

Vor Beginn der Feuerungsphase, d.h. vor dem Entfachen des Feuers, wird durch Drücken der Taste 24 der Motor 7 eingeschaltet, der die Klappenteile 3, 4 bis zum mittels des Einstellknopfes 23 vorgewählten Oeffnungswinkel $\alpha$, $\beta$ öffnet. Der Oeffnungswinkel der Klappenteile 3, 4 wird durch die Anzeige 22 optisch angezeigt. Die geschlossene Rauchklappe 2 kann nicht durch Drehen des Einstellknopfes 23 geöffnet werden. Zum Oeffnen der Rauchklappe 2 ist ein durch Drücken der Taste 24 erzeugter Oeffnungsbefehl nötig. Mittels des Einstellknopfes 23 kann eine Oeffnungsstellung zwischen ganz offen (100%) und teilweise offen (z.B. 25%) gewählt werden. Mit dem Einstellknopf 23 kann die Rauchklappe 2 jedoch nicht vollständig geschlossen werden.

Nach dem Anzünden des Feuers steigt die Temperatur im Rauchabzug 1 und auch im Raum 18 (Fig. 1) an. Erreicht nun die Temperatur im Wirkbereich des Temperaturfühlers 16 einen ersten Wert $T_1$, z.B. 50$^{\circ}$C, so wird ein im Steuergerät 1 untergebrachter, Teil der Steuerschaltung bildender Schaltkreis aktiviert, der die ZU-Taste 25 ausser Wirkung setzt. Ein manuelles Schliessen der Rauchklappe 2 ist somit nicht mehr möglich. Hingegen kann durch Drehen des Einstellknopfes 23 der Oeffnungswinkel $\omega$, $\beta$ der Klappenteile 3, 4 jederzeit verändert und an die Gegebenheiten angepasst werden. Das bedeutet, das das Rauchgas-Luftgemisch optimal eingestellt werden kann, so dass die Rauchgase nicht zu viel Raumluft mitziehen und somit heisser bleiben. Es kann eine bessere Wärmeübertragung an den Raum erfolgen. Diese Möglichkeit der Einstellung des Oeffnungswinkels der Klappenteile 3, 4 bringt besondere Vorteile bei Cheminées, bei denen der Feuerungsraum durch ein Fenster ganz oder teilweise geschlossen werden kann. Je nach dem, ob dieses Fenster ganz oder teilweise geschlossen oder sogar offen ist, ergeben sich andere Strömungsverhältnisse, welchen, wie erwähnt, durch entsprechende Einstellung des Oeffnungswinkels der Klappenteile 3, 4 Rechnung getragen werden kann.

Nach Beendigung der Feuerungsphase, d.h. wenn das Feuer nicht mehr unterhalten wird bzw. erlischt, erfolgt ein Auskühlen des Cheminées, was ein Rückgang der Temperatur im Rauchabzug 1 und in dem diesen umgebenden Schürzenhohlraum zur Folge hat. Stellt nun der Temperaturfühler 16 fest, dass die Temperatur auf einen zweiten Wert $T_2$, z.B. $30^{\circ}$C, abgesunken ist, so bewirkt der vorgängig, wie erwähnt, aktivierte Steuerkreis ein automatisches Schliessen der Rauchklappe 2, d.h. ein Zurückschwenken der Klappenteile 3,4 in ihre Schliessstellung 3' bzw. 4'. Bei vollständig geschlossener Rauchklappe 2 erlischt die Anzeige 22.

Falls nun z.B. durch erneutes Aufflackern des Feuers bei geschlossener Rauchklappe 2 die Temperatur wieder ansteigt und einen dritten Wert $T_3$, z.B. ebenfalls 30°C, erreicht, so wird der Motor 7 automatisch in Gang gesetzt und die Rauchklappe 2 wieder geöffnet. Sobald die Temperatur wieder auf den Wert $T_2$ gesunken ist, bewirkt der Schaltkreis, wie beschrieben, ein erneutes Schliessen der Rauchklappe 2. Auf diese Weise wird ein Hitzestau, der unerwünschte und gar schädliche Auswirkungen haben könnte, vermieden.

Entsprechend erfolgt auch zu Beginn der Feuerungsphase ein automatisches Oeffnen der Rauchklappe 2, sobald der Temperaturfühler 16 das Erreichen der erwähnten dritten Temperatur $T_3$, d.h. z.B. 30°C, feststellt. In den meisten Fällen ist jedoch in diesem Zeitpunkt die Rauchklappe 2 bereits offen, da sie vorgängig durch Betätigen der Taste 24 geöffnet worden ist.

Das Rückstellen des nach Entfachen des Feuers aktivierten Schaltkreises, der ein automatisches Schliessen der Rauchklappe 2 bewirkt, erfolgt beim Betätigen der AUF-Taste 24. Nach erfolgtem Rückstellen dieses Schaltkreises muss wieder die erwähnte Temperatur $T_1$ erreicht werden, um den Schaltkreis zu aktivieren. Bei nicht aktiviertem Schaltkreis ist ein manuelles Schliessen der Rauchklappe 2 durch Betätigen der ZU-Taste 25 jederzeit möglich.

Die Steuereinrichtung weist weiter einen ebenfalls nicht dargestellten Sicherheitsschaltkreis auf, der bei einem längeren Ausfall der Netzspannung oder einer Störung in der Steuerschaltung ein Oeffnen des Abschlussorganes bewirkt.

Bei einer möglichen Ausführung einer Steuerschaltung mit der vorstehenden Funktionsweise ist ein Messkreisverstärker vorgesehen, an den der Temperaturfühler 16 über die Verbindungsleitung 17 angeschlossen ist. Dieser Messkreisverstärker steht mit zwei Vergleichsstufen in Verbindung, von denen die eine das Erreichen der Temperatur $T_1$ und die andere das Erreichen der (im vorliegenden Fall gleichen) Temperaturen $T_2$ und $T_3$ feststellt. An die Ausgänge dieser Vergleichsstufen sind zwei Speicherstufen angeschlossen, die die Zustände "erste Temperatur $T_1$ überschritten" bzw. "Rauchklappe auf/ Rauchklappe zu" speichern. Diese beiden Speicherstufen steuern einen Sollwert-Bildungskreis an, der Sollwertsignale erzeugt, welche der im Motorgehäuse 7a untergebrachten Ansteuerschaltung zugeführt werden. Neben den erwähnten Schaltkreisen und - elementen weist die Steuerschaltung noch den früher erwähnten Sicherheitsschaltkreis auf.

Die Ansteuerschaltung weist eine Vergleichsschaltung auf, welche aufgrund der von der Steuerschaltung erhaltenen Sollwertsignale und von Istwertsignalen einen Ist-Sollwertvergleich durchführt und Steuersignale für den Antriebsmotor 7 erzeugt. Dieser kann beispielsweise ein Stellmotor "Belimo" Typ km 24 sh sein, welcher für die Erzeugung von Istwertgrössen modifiziert worden ist.

Anstelle oder neben einem Temperaturfühler 16 können auch andere Fühlorgane verwendet werden, so insbesondere ein Infrarotstrahlungsempfänger, der auf das Vorhandensein bzw. Fehlen einer Infrarotstrahlung anspricht. Ein solcher Infrarotstrahlungsempfänger würde demnach sofort beim Anzünden des Feuers ansprechen und ein Aktivieren des Steuerkreises sowie ein automatisches Oeffnen der Rauchklappe bewirken. Der Infrarotstrahlungsempfänger würde weiter feststellen, sobald keine Glut mehr vorhanden ist und dann ein automatisches Schliessen der Rauchklappe auslösen.

PATENTANSPRUECHE
_____

1.   Cheminée mit einem Rauchabzug, einem in diesem angeordneten, zwischen einer offenen und einer geschlossenen Stellung bewegbaren Abschlussorgan (2), einem Antrieb (7) für das Abschlussorgan (2), einer mit dem Antrieb (7) verbundenen, ein nach Beendigung der Feuerungsphase ansprechendes Fühlorgan (16) aufweisenden Steuereinrichtung (19) zum automatischen Schliessen des Abschlussorganes (2) beim Ansprechen des Fühlorganes (16) und von Hand betätigbaren Mitteln (25) zum Schliessen des Abschlussorganes (2), gekennzeichnet durch einen nach Beginn der Feuerungsphase aktivierbaren, insbesondere Teil der Steuereinrichtung (19) bildenden Schaltkreis, der im aktivierten Zustand die von Hand betätigbaren, vorzugsweise ein manuell betätigbares Steuerorgan der Steuereinrichtung (19) aufweisenden Mittel (25) zum Schliessen des Abschlussorganes (2) ausser Wirkung setzt.

2.   Cheminée nach Anspruch 1, gekennzeichnet durch von Hand betätigbare Mittel (24) zum Oeffnen des Abschlussorganes (2), die insbesondere ein manuell betätigbares Steuerorgan (24) der Steuereinrichtung (19) aufweisen.

3.   Cheminée nach Anspruch 2, dadurch gekennzeichnet, dass durch Betätigung des Steuerorganes (24) zum Oeffnen des Abschlussorganes (2) der Schaltkreis zurückstellbar ist.

4.   Cheminée nach einem der Ansprüche 1 - 3, dadurch gekennzeichnet, dass das Fühlorgan (16) ein Temperaturfühler ist, der nach Beginn der Feuerungsphase bei Erreichen einer ersten Temperatur ($T_1$) anspricht und den Steuerkreis aktiviert und der nach Beendigung der Feuerungsphase bei Erreichen einer zweiten Temperatur ($T_2$) anspricht und ein automatisches Schliessen des Abschlussorganes (2) bewirkt.

5.   Cheminée nach Anspruch 4, dadurch gekennzeichnet, dass der Temperaturfühler (16) bei einem Temperaturanstieg bei Erreichen einer dritten Temperatur ($T_3$), die vorzugsweise kleiner ist als die erste Temperatur ($T_1$), anspricht und ein automatisches Oeffnen des Abschlussorganes (2) bewirkt.

6.   Cheminée nach einem der Ansprüche 1 - 3, dadurch gekennzeichnet, dass das Fühlorgan ein Infrarotstrahlungsempfänger ist, der das Erlöschen des Feuers feststellt und ein automatisches Schliessen des Absperrorganes (2) auslöst und der vorzugsweise zudem beim Entfachen eines Feuers anspricht und ein automatisches Oeffnen des Absperrorganes (2) bewirkt.

7.   Cheminée nach einem der Ansprüche 1 - 6, gekennzeichnet durch ein von Hand betätigbares und mit der Steuereinrichtung (19) verbundenes Regelorgan (23) zum Einstellen des Oeffnungswinkels ($\alpha, \beta$) des Abschlussorganes (2), wobei vorzugsweise das Regelorgan (23) bei geschlossenem Abschlussorgan (2) unwirksam ist.

8.    Cheminée nach einem der Ansprüche 1 - 7, dadurch gekennzeichnet, dass die Steuereinrichtung (19) einen im Störungsfall  ein Oeffnen des Abschlussorganes (2) bewirkenden Sicherheitsschaltkreis aufweist.

9.    Cheminée nach einem der Ansprüche 1 - 8, gekennzeichnet durch eine optische Anzeigevorrichtung (22) zum Anzeigen der Stellung des Abschlussorganes (2).

10.    Cheminée nach einem der Ansprüche 1 - 9, dadurch gekennzeichnet, dass das Abschlussorgan (2) zwei miteinander in entgegengesetztem Sinn verschwenkbare Abschlussteile (3, 4) aufweist.

Fig. 1

Fig. 3

Fig. 2

0133606